# EUROPEAN PATENT SPECIFICATION

(11) **EP 1 363 506 B1**
(45) Date of publication and mention of the grant of the patent: **23.11.2005**
(21) Application number: 02700176.7
(22) Date of filing: 21.02.2002
(51) Int. Cl.: A23L 1/16, A23L 1/164, A21D 8/04, A23L 1/105

(54) **PRODUCTION OF STARCHY FOOD PRODUCTS**
HERSTELLUNG VON STÄRKEHALTIGEN LEBENSMITTELPRODUKTEN
PRODUCTION DE PRODUITS FECULENTS

(30) Priority: 21.02.2001 DK 200100285; 03.10.2001 DK 200101447
(43) Date of publication of application: 26.11.2003
(73) Proprietor: Novozymes A/S, 2880 Bagsvaerd (DK)
(72) Inventor: ROSS, Andrew, Corvallis, OR 97333 (US); SPENDLER, Tina, DK-2730 Herlev (DK); CHRISTIANSEN, Luise, DK-1718 Kobenhavn V (DK)
(74) Representative: Knudsen, Sten Lottrup
(86) International application number: PCT/DK2002/000114
(87) International publication number: WO 2002/065854

(56) References cited:
- EP-A- 1 057 415
- EP-A- 1 108 360
- WO-A-01/78524
- WO-A-02/03805
- WO-A-94/04035
- WO-A-99/53769
- AU-B- 723 031
- JP-A- 6 169 717
- JP-A- 2000 157 191
- US-A- 4 058 631
- US-A- 4 567 046

## Description

### FIELD OF THE INVENTION

The invention relates to a processes for manufacturing starchy food products with improved properties, such as cereal-based food products, fried products, noodles, snack products and breakfast cereals.

### BACKGROUND OF THE INVENTION

The following publications disclose the use of various lipolytic enzymes in the production of starchy food products: WO 9844804, EP 575133, EP 585988, WO 9404035, WO 0032758, US 4567046 EP 171995, WO 9953769, EP 1057415, US 5378623, AU-B-723031.

The use of amylase, protease or cellulase for reducing oil-uptake in fried products is known from US 4058631, JP 2000157191 or JP 6169717.

### SUMMARY OF THE INVENTION

The inventors have found that several properties of starchy food products may be improved by treating the raw materials with a lipolytic enzyme. Such an enzyme treatment may improve the dough handling during processing, the texture, the crispiness, the mouthfeel and the appearance. The enzyme treatment may also reduce the oil content of the product or the oil uptake during frying, reduce the breakage of the product, increase the surface smoothness, increase the surface firmness, increase the core firmness, improve the resistance to breakage and improve shape retention during further processing. The enzyme treatment may further increase the bulkiness (reduce the bulk density) of a fried product and may allow a reduction or elimination of the amount of emulsifier added.

Accordingly, the invention provides production of starchy food products by a process wherein raw materials are treated with a lipolytic enzyme. The lipolytic enzyme has phospholipase, and/or galactolipase activity. It may particularly be used in the absence of protease activity.

### DETAILED DESCRIPTION OF THE INVENTION

### Starchy food product

The starchy (or starch-based) food product may be cereal-based (e.g. flour-based) or potato-based. Examples of fried products, are noodles (such as fried instant noodles), fried snack products potato chips, tortilla chips, corn chips.

### Fried flour-based products

Fried flour-based products may be produced by a process comprising:
a) preparing a dough comprising flour, water and a lipolytic enzyme which has phospholipase and/or galactolipase activity,
b) holding the dough during and/or after mixing, and
c) frying the dough to obtain the fried product.

By the process of the invention, the uptake of oil during frying may be reduced, e.g. by at least 1 % relative to the product weight, particularly at least 2%, such as 1-10% compared to a similar process without the treatment with the lipolytic enzyme.

The product after frying may have a water content below 10 % by weight. The fried flour-based products may be fried instant noodles, fried snack products or doughnuts.

### Noodles

Noodles may be made by a process comprising:
a) preparing a noodle dough which comprises flour, water and a lipolytic enzyme having phospholipase or galactolipase activity and which is free from protease activity;
b) sheeting the noodle dough to make noodle strands;
c) holding the dough or the strands before, during or after b); and
d) frying the noodle strands.

The dough preparation may be done by compounding (kneading) the raw materials The sheeting is done rolling the dough (e.g. by manual rolling) into a sheet and cutting the sheet into noodle strands,

The dough may be rested after mixing, or during the sheeting process, to allow the lipolytic enzyme to act. The total holding time during mixing, any subsequent resting and sheeting is typically from 15 minutes to 2 hours, e.g. 30-60 minutes.

### Noodle dough

The flour used to prepare the dough may be from a cereal such as wheat, rye, barley, oats, maize/corn, rice, sorghum, millet, and buckwheat, as well as any mixtures thereof. Flour from other plants may also be used, e.g. potato, sweet potato, yam, taro, tapioca, and beans, such as, e.g., soy bean and mung bean. Examples include wheat flour, durum wheat flour, rye flour, soybean flour, oat flour, buckwheat flour, rice flour; starches such as potato starch, tapioca starch, corn starch and the like.

The noodle dough may comprise an alkali (kan sui) such as sodium carbonate, potassium carbonate or sodium hydroxide. The dough may have a pH of 8-12, e.g. 10-11. The dough may further comprise a chemical leavening agent such as sodium hydrogen carbonate, ammonium carbonate, ammonium bicarbonate, potassium carbonate. The content of sodium carbonate, potassium carbonate, sodium hydroxide individually or mixtures of any or all of these salts, if present at all, is typically at most 1.5% (w/w) - based on flour, e.g. at most 1% (w/w), or at most 0.5% (w/w), such as e.g. in the range of 0.1-1.5% (w/w), particularly 0.1-0.5%(w/w), such as about 0.3%(w/w).

The lipolytic enzyme may act on substrates (lipids) in the cereal flour, or a lipid (such as a phospholipid, a galactolipid or fat) may be added to the dough, e.g. in an amount of 0.05-20 g/kg of flour, e.g. 0.1-10 g/kg. The phospholipid may be a diacyl-glycero-phospholipid, such as lecithin or cephalin.

The dough may be made with or without addition of emulsifier, e.g. monoglycerides and diacetyltartaric esters of mono-and di-glycerides. Advantageously, the addition of a lipolytic enzyme may allow a reduction or elimination of the amount of emulsifier.

### Fried instant noodles

The noodle strands may be subjected to a steaming prior to frying., e.g. 95-100°C at atmospheric pressure or 100-120°C under increased pressure. The noodle strands may e.g. be in a raw state or half-dried before steaming. Steaming may be done for a period of time from e.g. 30 seconds to 5 min. Alternatively, a treatment in a microwave oven may be used to obtain a similar result. The steaming may be performed on noodle strands prior to frying or on noodle sheets before dividing into noodle strands.

The frying is generally done in edible oils such as palm oil, partially hydrogenated palm oil, refined palm oil, pure lard, modified lard, and mixtures of these are used. The noodle strands are fried for e.g. about ½ to 3 minutes at temperatures of about 130-170°C. The noodles may be pressed into blocks before frying.

Fried instant noodles made with a lipolytic enzyme according to the invention may have a decreased oil content, and this process may be used to improve the quality of fried instant noodles made from wheat flour having a relatively low content of protein. Thus, the dough may be made from wheat flour with less than 15% protein by weight, e.g. less than 12%, or less than 10%.

The process may also comprise the step of shaping the dough into a desired form prior to frying, e.g. to form waved noodles.

The fried instant noodles may have a lower oil content after frying and/or improved texture. The fried noodles (e.g. in the form of noodle blocks) may have an improved resistance to breakage.

The fried instant noodles may be shipped and stored, and are ready to eat after rehydration, e.g. by soaking in very hot water or by boiling in water for a short period such as 0.5 - 6 min, e.g. 1-3 min. After the rehydration, they may have increased surface firmness, increased core firmness, improved texture, increased surface smoothness, improved mouthfeel, improved cooked noodle appearance, improved shape retention (e.g. for waved noodles) and/or reduced oil content compared to a noodles made without use of said enzyme.

The process can be used to produce fried instant noodles such as Chinese-style fried instant noodles; Japanese-style fried instant noodles such as fried instant ramen, Korean style fried instant noodles such as fried instant ramyun, fried pack noodles, fried cup noodles, fried bowl noodles, and European-style fried instant noodles.

### Snack product

The fried snack product may be potato chips, corn chips, nachos, and prawn crackers or snack pellets (also known as third-generation or 3G products). These practically non-expanded products are cooked and extruded, typically in a single or twin-screw extruder, and are shelf-stable. They are fried at a later stage, typically shortly before being flavored and packaged by the end manufacturer.

An extruded snack product may be produced by a process comprising the following steps:
a) preparing a dough comprising flour, water and a lipolytic enzyme,
b) holding the dough during or after mixing,
c) heating and extruding the dough to form pellets,
d) drying, and
e) frying the pellets in oil.

The fried snack products may be made by a process wherein snack pellets comprising cereal flour, optionally isolated starch, and a lipolytic activity are fried. The raw material mixture typically contains up to 32 % water (e.g. 20-32 %), and may optionally be preconditioned by heating, e.g. up to 95°C for 20-240 seconds.

The extrusion cooking may be done in a single-screw or double-screw extruder with a residence time of 30-90 seconds. The extruder will typically comprise a cooking zone at 80-150°C and a forming zone at 65-90°C. After the extrusion with heating, the mixture will be shaped and will typically have a temperature of 60-100 °C (particularly 70-95°C) and a moisture content of 25-30 % or 20-28 %.

The drying of the pellets may be done at 70-95°C for 1-3 hours to reach an exit moisture of 6-8 % in the snack pellets.

The dried snack pellets may be stored or distributed to a snack processor. The snack pellets may then be expanded by heating by frying in oil.

### Potato chips

Potato chips may be produced by a process comprising:
a) contacting potato slices with an aqueous solution comprising a lipolytic enzyme which has phospholipase or galactolipase activity,
b) blanching the slices, and
c) frying the slices in oil.

The process may be performed as follows: Potatoes are washed, sorted and peeled. Glucose levels are measured. Potatoes may be conditioned to reduce level of glucose prior to washing. The potatoes are peeled, sliced and washed. The slices are immersed in a solution of the lipolytic enzyme and then blanched. Thickness correlates with oil up take. Potatoes are fried in oil at 165-190°C for 90 - 200 seconds to below 2 % moisture. Then potato chips goes through a drip and dry section. Potato chips are sorted, seasoned and packed.

### Tortilla chips and corn chips

Tortilla chips and corn chips can be produced by a process comprising:
a) preparing a dough comprising masa, water and a lipolytic enzyme,
b) holding the dough during or after mixing, and
c) frying the dough to obtain the chips.

Tortilla chips can be made directly from masa (= corn dough) or from dry masa flour from flour mills. This may be based on a traditional masa process consisting of: Cooking of corn grain for 5 - 50 minutes in lime solution pH 11, steeping in solution overnight (12-16 hours). Washing with water to remove pericarp, lime and solubles for 1-3 min at 10-21 C. Grinding of masa. Lamination, sheeting and cutting of tortilla or corn chips (51-53% moisture). Tortilla chips are baked at 300-332°C for 15-30 sec before frying (35-37% moisture). Tortilla chips and corn chips (not baked before frying) are equilibrated before frying (150°C for 10-15 min). Final moisture is less than 2%.

### Lipolytic enzyme

The invention uses a lipolytic enzyme, i.e. an enzyme which is capable of hydrolyzing carboxylic ester bonds to release a carboxylic acid or carboxylate (EC 3.1.1). The lipolytic enzyme has galactolipase activity and/or phospholipase activity. The activities may be determined by any suitable method, e.g. by assays known in the art or described later in this specification.
■ Galactolipase activity (EC 3.1.1.26), i.e. hydrolytic activity on carboxylic ester bonds in galactolipids such as DGDG (digalactosyl diglyceride). The galactolipase activity (digalactosyl diglyceride hydrolyzing activity or DGDGase activity) may be determined, e.g., by the plate assay in WO 02/03805 (PCT/DK01/00472) or by the monolayer assay 1 or 2 in WO 2000/32758.
■ Phospholipase activity (A1 or A2, EC 3.1.1.32 or 3.1.1.4), i.e. hydrolytic activity towards one or both carboxylic ester bonds in phospholipids such as lecithin. The phospholipase activity may be determined by the plate assay in WO 02103805 (PCT/DK 01/00472) or by an assay WO 2000/32758, e.g. the PHLU, LEU, monolayer or plate assay 1 or 2.
■ Triacylglycerol lipase activity (EC 3.1.1.3), i.e. hydrolytic activity for carboxylic ester bonds in triglycerides, e.g. 1,3-specific activity, particularly on long-chain triglycerides such as olive oil. The activity on long-chain triglycerides (olive oil) may be determined by the SLU method described in WO 00/32758.

The lipolytic enzyme may have a narrow specificity with activity for one of the three substrates and little or no activity for the other two, or it may have a broader specificity with predominant activity for one substrate and less activity for the other two substrates. A combination of two or more lipolytic enzymes may be used.

### Sources of lipolytic enzymes

The lipolytic enzymes may be prokaryotic, particularly bacterial, or eukaryotic, e.g. from fungal or animal sources. Lipolytic enzymes may be derived, e.g. from the following genera or species: *Thermomyces, T. lanuginosus* (also known as *Humicola lanuginosa*); *Humicola, H. insolens; Fusarium, F. oxysporum, F. solani, F. heterosporum; Aspergillus, A. tubigensis, A. niger, A. oryzae; Rhizomucor, Candida, C. antarctica, C. rugosa, Penicillium, P. camembertii; Rhizopus, Rhizopus oryzae; Absidia. Dictyostelium,* Mucor, *Neurospora, Rhizopus, R. arrhizus, R. japonicus, Sclerotinia, Trichophyton, Whetzelinia, Bacillus, Citrobacter, Enterobacter, Edwardsiella, Erwinia, Escherichia, E. coli, Klebsiella, Proteus, Providencia, Salmonella, Serratia, Shigella, Streptomyces, Yersinia, Pseudomonas, P. cepacia.*

Some particular examples of lipolytic enzymes follow:
■ Phospholipase from bee or snake venom or from mammal pancreas, e.g. porcine pancreas.
■ Phospholipase from *Aspergillus oryzae* (EP 575133, JP-A 10-155493), *Hyphozyma* (US 6127137)
■ Lipase from *A. tubigensis* (WO 9845453), *Fusarium solani* (US 5990069).
■ Lipase/phospholipase from *Fusarium oxysporum* (WO 98/26057).
■ Lipolytic enzyme from *F. culmorum* (US 5830736) or as described in WO 02/00852 (PCT/DK 01/00448) or DK PA 2001 00304.
■ A variant derived from one of the above enzymes by substituting, deleting or inserting one or more amino acids, e.g. as described in WO 2000/32758, particularly Examples 4, 5, 6 and 13, such as variants of lipase from *Thermomyces lanuginosus* (also called *Humicola lanuginosa*).

The lipolytic enzymes may have a temperature optimum in the range of 30-90°C, e.g. 30-70°C. In particular embodiments, the lipolytic enzyme is not a native cereal enzyme and is not an enzyme present naturally in wheat.

### Enzyme treatment

The enzymatic treatment may conducted by adding the enzyme to the dough or to flour used in the dough and holding the mixture. Kneading of the dough may serve to disperse the lipolytic uniformly in the dough. The process is done so as to allow the enzyme reaction to take place at an appropriate holding-time at an appropriate temperature.

The enzymatic treatment may be conducted at any suitable pH, such as e.g. in the range 2-12, such as 2-10 or 5-12. The lipolytic enzyme is active at the pH of the dough, e.g. in the range of pH 2-12, 7-12 or 8-11. The process enzymatic treatment may e.g. be conducted at 3-50°C, at a duration found suitable, e.g. for at least 0.1 hours, e.g. in the range of 0.1-6 hours.

The amount of enzyme, may, e.g. be in the range of 0.01-50 mg of enzyme protein per kg of flour, such as e.g. 2-20 mg enzyme protein per kg flour. An enzyme with phospholipase activity may be added to the dough in an amount of at least 0.5 kLEU per kg flour, such as at least 1 kLEU per kg flour, e.g. in the range of 0.5- 45 kLEU per kg flour, such as e.g. 0.5-20 kLEU per kg flour, e.g. 1 - 20 kLEU per kg flour, or e.g. 5-20 kLEU per kg flour. The kLEU unit of phospholipase activity is determined as described later in the description.

### Assays for lipolytic enzyme activities

### Phospholipase activity (LEU)

Phospholipase activity (LEU) is measured as the release of free fatty acids from lecithin. 50 µl 4% L-alpha-phosphatidylcholine (plant lecithin from Avanti), 4 % Triton X-100, 5 mM CaCl₂ in 50 mM HEPES, pH 7 is added 50 µl enzyme solution diluted to an appropriate concentration in 50 mM HEPES, pH 7. The samples are incubated for 10 min at 30 °C and the reaction stopped at 95 °C for 5 min prior to centrifugation (5 min at 7000 rpm). Free fatty acids are determined using the NEFA C kit from Wako Chemicals GmbH.

1 LEU equals the amount of enzyme capable of releasing 1 µmol of free fatty acid/min at these conditions. 1 kLEU = 1000 LEU.

### Lipase activity (LU)

The LU activity unit for lipase (triacylglycerol lipase) activity is defined in WO 00/32758 as follows. 1 kLU = 1000 LU.

A substrate for lipase is prepared by emulsifying tributyrin (glycerin tributyrate) using gum Arabic as emulsifier. The hydrolysis of tributyrin at 30 °C at pH 7 is followed in a pH-stat titration experiment. One unit of lipase activity (1 LU) equals the amount of enzyme capable of releasing 1 µmol butyric acid/min at the standard conditions.

### EXAMPLES

### Example 1: Fried instant noodles - phospholipase treatment

An enzyme with phospholipase activity was dissolved in water and added to flour to make a dough for instant noodle production. The dosages used are shown below in mg enzyme protein per kg flour and as phospholipase activity (kLEU/kg flour, unit defined above. The enzyme used is disclosed in SEQ ID NO. 2 of WO 98/26057.

Dough formulation for noodles with or without enzyme additions was 300 g of wheat flour (Indonesian flour, protein content 9 % by weight) and a solution consisting of 102 g of water, 3 g of NaCl, and 0.9 g of kansui (sodium carbonate).

The ingredients were kneaded into a dough by mixing in a vertical mixer for a total time of 10 min This dough was then compounded by passing 4 times through noodle-making rollers. The compounded dough sheet was then rested for 1 h before being reduced in thickness by passing the dough-sheet through sequentially narrower roller gaps. The resulting raw noodle strands were placed in steaming baskets and steamed at atmospheric pressure at a steam temperature of 100°C for 5 min. The steamed noodles were allowed to cool (0.5 min) and then fried in palm oil at 160°C for 45 s to produce the final steamed and fried instant noodles.

The oil content of the fried noodles was determined as the residue obtained after solvent evaporation with petroleum ether or hexane after boiling in dilute HCl, filtering, and gentle drying. The surface firmness was determined as: penetration distance (mm) to 0.1 N force, and the core firmness was determined as maximum cutting force (g). Thus, harder noodles correspond to a lower value of surface firmness and a higher value of core firmness. The results are shown in the following table.

| **Enzyme dosage** | **Phospholipase activity** | **Surface firmness** | **Core firmness** | **Oil content** |
|---|---|---|---|---|
| mg /kg flour | kLEU/kg flour | mm | g | (% w/w) |
| 0 | 0 | 0.46 | 34.6 | 20.8 |
| 4.8 | 7.0 | 0.42 | 37.8 | 17.7 |
| 9.4 | 13.7 | 0.40 | 38.9 | 17.9 |
| 14.3 | 20.8 | 0.38 | 39.9 | 18.2 |

The results show that the addition of an enzyme having phospholipase activity results in harder noodles. Addition of the enzyme having phospholipase activity also reduced the oil content of the fried instant noodles.

After re-cooking, the appearance of the ready-to-eat noodles was found to be smoother and glossier.

For comparison, a similar experiment was made with addition of a 1-3 specific triacylglycerol lipase (having the amino acid sequence disclosed in 1-269 of SEQ ID NO: 2 of US 5,869,438) at 30 kLU / kg flour (1kLU = 1000 LU defined in WO 00/32758) in the same formulation and process as described above. The triacylglycerol lipase had essentially no effect on the oil content of the fried noodles (21.1 % compared to 20.8 % for the control) or core firmness of the re-cooked ready-to-eat noodles (34.1 g compared to 34.6 g for the control).

### Example 2: Fried instant noodles - phospholipase treatment

Noodles were made and assessed as described in Example 1, but using a different type of wheat flour ("Pelikaan", Meneba Flour Mills, Rotterdam, The Netherlands, protein content 11.4% w/w). The phospholipase dosages and the results were as follows.

| **Enzyme dosage** | **Phospholipase activity** | **Surface firmness** | **Core firmness** | **Oil content** |
|---|---|---|---|---|
| mg /kg flour | kLEU/kg flour | mm | g | (% w/w) |
| 0 | 0 | 0.34 | 55.9 | 18.1 |
| 2.9 | 4.2 | 0.33 | 61.5 | 16.8 |
| 4.3 | 6.2 | 0.34 | 64.9 | 15.9 |
| 8.6 | 12.5 | 0.34 | 58.9 | 16.4 |
| 12.9 | 18.7 | 0.30 | 66.6 | 16.5 |

The results show that addition of the enzyme having phospholipase activity resulted in increased levels of surface firmness at the highest dosage. The results also show that the core of the noodles became more firm after addition of the enzyme having phospholipase activity. Addition of the enzyme having phospholipase activity also reduced the oil content of the fried instant noodles by up to 3.2% compared to the process without use of said enzyme.

Observation showed that the boiled noodles also had smoother surface characteristics despite only a marginal change in surface firmness. The improvement in surface smoothness and the increased core firmness resulted in instant noodles with overall improved textural or mouthfeel characteristics.

### Example 3: Effect on snack texture

Snack pellets were produced according to a sheeted pellet procedure with addition of a lipolytic enzyme as partial replacement of emulsifier. Two different lipolytic enzymes were tested: lipase from *Thermomyces lanuginosus* and lipase/phospholipase from *Fusarium oxysporum.* A control was made without lipolytic enzyme but with a higher amount of emulsifier.

The following raw materials were mixed: Potato granules, glucose, salt, vegetable oil, mono- and diglycerides as emulsifiers, and dicalciumphosphate. In the experiments with lipolytic enzyme, the amount of emulsifier was reduced to half.

The raw materials were treated by preconditioning at 20-80°C for 1-2 minutes, followed by extrusion at 80-130°C for 30-45 seconds, forming (sheeting) and drying of the single pellets. The pellets were allowed to rest for at least 24 hours to assure optimal water migration, before expansion. Expansion was done in palm oil at approximately 180°C for 9-11 seconds.

The texture was judged by a panel of 4 persons. The endo-amylase and dosage used and the observed effect were as follows:

| **Lipolytic enzyme** | **Dosage, LU/kg raw material** | **Effect** |
|---|---|---|
| *F. oxysporum* | 2500 LU/kg | More crispy than reference, a very nice product. |
| *F. oxysporum* | 5000 LU/kg | More crispy than reference, a very nice product. |
| *T. lanuginosus* | 10000 LU/kg | More crispy than reference, a very nice product. |

All enzyme-treated products looked nicer than the reference with fewer, smaller and better distributed air bubbles after expansion.

### Example 4: Snack pellets - Reduction of emulsifier and reduction of oil uptake

Snack pellets were produced according to a sheeted pellet procedure with addition of a lipolytic enzyme (lipase/phospholipase) from *F. oxysporum.*

The recipe consisted of potato granules, glucose, salt, vegetable oil, dicalcium phosphate and emulsifier (mono- and diglyceride). A blank was made without lipolytic enzyme, and snack pellets according to the invention were made with addition of the lipolytic enzyme (5000 LU/kg Raw material) and 50 % reduction of the amount of emulsifier.

The procedure consisted of preconditioning at 20-80°C for 1-2 minutes, extrusion at 80-130°C for 30-45 seconds, forming (sheeting) and drying of single pellets. The pellets were allowed to rest at least 24 hours to assure optimal water migration. Expansion was done in palm oil at approximately 180°C for 9-11 seconds.

The dough according to the invention and the blank were both processed without problems, indicating that it is possible to reduce the amount of emulsifier in the recipe by at least 50 % in the production of snack pellets.

The fat content of the finished product was 20.5 % by weight in the product of the invention and 23.2 % in the blank, i.e. a fat reduction of 11.6 %.

The bulk density of the expanded product was found to be 66 g/L for the product of the invention and 77 g/L for the blank, i.e. a significant difference between the volumes of the expanded products. This indicates that the addition of lipolytic enzyme significantly increases the volume and reduces the weight per volume of the finished product by 14 %, so less product is required to fill a bag.

The texture was judged by a panel of 4 persons. The enzyme-treated product was judged to be more crispy than the blank and termed "a very nice product", it looked nicer than the blank with fewer, smaller and better distributed air bubbles after expansion.

## Claims

1. A process for producing a fried flour-based product, comprising the steps of:
a) preparing a dough comprising flour, water and a lipolytic enzyme which has phospholipase or galactolipase activity,
b) holding the dough during or after mixing, and
c) frying the dough to obtain the fried product.

2. The process of claim 1, further comprising the step of steaming prior to frying.

3. The process of claim 1 or 2 wherein the fried product is fried instant noodles, a fried snack product or doughnuts.

## Patentansprüche

1. Verfahren zur Herstellung eines frittierten Produkts auf Mehlbasis umfassend die Schritte:
a) Herstellen eines Teiges, der Mehl, Wasser und ein lipolytisches Enzym, das Phospholipase- oder Galactolipase-Aktivität besitzt, enthält,
b) Halten des Teiges während oder nach dem Mischen und
c) Frittieren des Teiges, um das frittierte Produkt zu erhalten.

2. Verfahren nach Anspruch 1, zusätzlich enthaltend den Schritt des Dampfgarens vor dem Frittieren.

3. Verfahren nach Anspruch 1 oder 2, wobei das frittierte Produkt frittierte Instant-Nudeln, ein frittierter Knabberartikel oder Doughnuts ist.

## Revendications

1. Procédé pour produire un produit à base de farine frite, comprenant les étapes de :
a) préparation d'une pâte comprenant de la farine, de l'eau et une enzyme lipolytique qui a une activité phospholipase ou galactolipase,
b) maintien de la pâte pendant ou après le mélange, et
c) friture de la pâte pour obtenir le produit frit.

2. Procédé selon la revendication 1, comprenant de plus l'étape de cuisson à la vapeur avant la friture.

3. Procédé selon la revendication 1 ou 2, dans lequel le produit frit se rapporte à des nouilles frites instantanées, à un produit de restauration rapide ou à des beignets frits.
